# EUROPEAN PATENT SPECIFICATION

(11) **EP 4 172 646 B1**
(45) Date of publication and mention of the grant of the patent: **25.11.2026**
(21) Application number: 21730307.2
(22) Date of filing: 02.06.2021
(51) Int. Cl.: G01S 7/497, G01S 17/931, G01S 7/48, G01S 17/87, G01S 7/40, G01S 7/41, G01S 13/87, G01S 13/931, G01S 7/539, G01S 15/87, G01S 15/931

(54) **SELF-TEST METHOD FOR A RANGING SENSOR-ARRANGEMENT OF A WORK MACHINE**
SELBSTTESTVERFAHREN FÜR EINE ENTFERNUNGSMESSUNGSSENSORANORDNUNG EINER ARBEITSMASCHINE
PROCÉDÉ D'AUTO-TEST POUR UN AGENCEMENT DE CAPTEUR DE MESURE DE DISTANCE D'UNE MACHINE DE TRAVAIL

(30) Priority: 29.06.2020 SE 2030214
(43) Date of publication of application: 03.05.2023
(73) Proprietor: Epiroc Rock Drills Aktiebolag, 701 91 Örebro (SE)
(72) Inventor: LARSSON, Johan, 702 31 Örebro (SE); KALANDER, Jan, 702 18 Örebro (SE)
(74) Representative: Epiroc Rock Drills AB
(86) International application number: PCT/SE2021/050510
(87) International publication number: WO 2022/005357

(56) References cited:
- EP-A1- 3 299 839
- WO-A1-2019/187938
- WO-A1-2021/001171
- DE-A1- 10 055 457
- DE-A1- 102005 059 902
- DE-B4- 10 055 457

## Description

### TECHNICAL FIELD

The present disclosure relates to a method and arrangement for a work machine. In particular, the disclosure relates to a computer-implemented method and arrangement for diagnosing range detection capabilities of one or more laser range scanners used in a tramming assist application. The disclosure also relates to corresponding computer programs configured to cause execution of the method and a work machine.

### BACKGROUND

Day-to-day operations of mining and tunnelling typically involve cycles of drilling, bolting, and blasting using work machines, e.g., mining machines configured for performing such operations. Historically, work machines, such as trucks, loaders, drilling rigs and haulers, have been operated by an on-board operator present within the machine. However, in the constantly on-going process of improving safety, efficiency and productivity; such machines are to an increasing extent being configured for autonomous operation and/or remote operation. In some examples, a work machine, e.g., mining machine, may be used in a fully automated, autonomous mode during some aspects of the mining/tunnelling operation, while other aspects call for operator control, e.g., from a remote control room.

Autonomous or remote control operation of a work machine used in a mining or construction environment, e.g., a mining machine or tunnelling machine, is presented with a number of environmental challenges due to the harsh environment in which they operate. Not only is a mining or tunnelling environment constantly evolving due to the excavation process, but the excavation process may also bring about an environment with low visibility, e.g., due to dust from the excavation process.

In recent years, range detection techniques using one or more range detection sensors, e.g., laser range scanners, are used to support viable route determination and tramming assist for a work machine, e.g., a mining machine, performing a transport operation to relocate from a first position to a second position within the work environment, e.g., at a construction site, in a mine environment or in an underground mine environment. In the following, performing such transport operations will be referred to as tramming. One or more range detection sensors, e.g., laser range scanners, may be employed to determine a distance to the surrounding tunnel walls or other obstacles along the path, e.g., during autonomous tramming of a work machine and/or tramming in a remote control mode.

Range detection, e.g., using laser technology, provides the advantage of enabling accurate readings. However, in construction environments, e.g., tunnel construction environments or underground mine environments, range readings from a range detection sensor may be affected by dirt on a lens of the sensor or by pollution in an ambient air, e.g., from dust particles. The contaminated lens or the polluted air, may affect the accuracy of the range readings provided by the range detection sensor. A number of mechanical solutions have been developed to prevent contamination, but there are still frequent situations when inaccurate range readings are received and/or when visibility is impaired for the range detection sensors. In particular, there are a number of situations when there are uncertainties related to the ability to localize a work machine in the construction environment; the uncertainties in many cases depending on uncertainties regarding the range detection sensor visibility.

Background art is known from automotive applications, e.g., through DE 10 2005 059902 A1, EP 3 299 839 A1, and DE 100 55 457 A1.

Further background art is disclosed in WO2019/187938 that discloses a computer implemented method for determining range detection sensor functionality based on a determination of abnormal range readings. While providing improvements to remote detection of sensor visibility, i.e., without the need for visual inspection of the sensor, there is a need for improvements in the sensor functionality assessment and in particular for diagnosing range detection capabilities of laser range scanners; putting safety first and optimizing productivity for the sensor carrying machine.

Consequently, there is a need to improve assessment of laser range scanner functionality and to diagnose range detection capabilities of respective laser range scanners used in a tramming assist arrangement.

### SUMMARY

It is therefore an object of the present disclosure to provide a method, a computer program product, a tramming assist arrangement, and a work machine that seeks to mitigate, alleviate, or eliminate all or at least some of the above-discussed drawbacks of presently known solutions.

This and other objects are achieved by means of a method, a computer program product, a tramming assist arrangement, and a work machine as defined in the appended claims. The term exemplary is in the present context to be understood as serving as an instance, example or illustration.

According to a first aspect of the present disclosure, a method performed in a tramming assist arrangement of work machine configured for autonomous tramming and/or remote control tramming at a construction site or as a mining machine in a mine environment is provided. The tramming assist arrangement comprises one or more laser range scanners configured to determine a distance from the respective sensor to path barriers present along a path travelled by the work machine during tramming. The method comprises obtaining respective sets of range readings, e.g., from a laser scan over a range detection field or segment, from respective laser range scanners; each range reading comprising a measured distance, wherein each respective set of range readings is obtained within a range reading segment having an origin at the respective laser range scanner, wherein the range reading segment is divided into two or more sub-segments each covering a configurable angle range of a range detection field covered by the respective laser range scanner, and wherein range readings of the obtained set of range readings are associated to the two or more sub-segments within the range reading segment. The method further comprises classifying range readings in their respective sub-segments for each obtained set of range readings according to the measured distance and diagnosing range detection capabilities of the respective laser range scanners based on the classifying.

Classifying of the range readings for each set of range readings comprises attributing the range readings of respective sets of range readings to a plurality of groups of range readings, wherein one or more range readings are attributed to a first group of range readings. Range readings indicating a measured distance above or below a threshold value may for example be attributed to the first group of range readings. A distribution pattern is determined, wherein the distribution pattern may reflect a threshold based distribution of range readings to a plurality of groups of range readings, and wherein the distribution pattern identifies at least a distribution of range readings attributed to the first group of range readings. Diagnosing of the range detection capability of respective range detection sensors may be performed based on the determined distribution pattern.

The obtaining of the set of range readings comprises obtaining each respective set of range readings within a range reading segment having an origin at the respective laser range scanners and associating range readings of the obtained set of range readings to at least one sub-segment within the range reading segment. The obtained set of range readings, may be classified according to their associating to respective one or more sub-segments. The associating of the range readings to respective sub-segments provides the advantage of allowing a diagnosing with a higher resolution, i.e., to diagnose deficiencies in a specified sub-segment of a range detection sensors; and to combine a knowledge of such a deficiency with diagnosing from other range detection sensors to diagnose a range detection capability for a work machine as a whole.

In some examples, the associating of the obtained set of range readings comprises associating the range readings to a plurality of adjacent sub-segments within the range reading segment. In some examples, the step of obtaining respective sets of range readings may be repetitively performed for a range detection sensor. Range readings from consecutively obtained sets of range readings for a range detection sensor may be associated to respective single sub-segments, the sub-segment being symmetrically configured around a centric range reading that is shifted between the consecutively obtained sets of range readings. Classifying of the range readings may be performed using the consecutively obtained sets of range readings.

The disclosed method has the advantage of improving accuracy and consistency for existing tramming assist arrangements, e.g., as used in a mining machine in mine environment or in a work machine used in a construction site environment. The disclosed method provides for improvements in validating sensor data taking a challenging environmental context into account; to determine if the data from one or more range detection sensors, e.g., laser range scanners, comprises enough information to reliably estimate a machine position within the environment or to reliably estimate an obstacle position in the environment. The disclosed method further has the advantage of allowing improvements to maintenance planning for such tramming assist arrangements; avoiding undue stops during scheduled work shifts without compromising safety. Moreover the disclosed method has the advantage that it can be easily implemented in existing mining machines.

In some examples, the method further comprises adapting a velocity of the tramming mining machine based on the diagnosing of the range detection capabilities. In some examples, the range detection sensor is a laser range scanner.

According to a second aspect of the present disclosure, there is provided a computer program product comprising a non-transitory computer readable medium having thereon a computer program comprising program instructions loadable into processing circuitry and configured to cause execution of the method according to the first aspect when the computer program is run by the processing circuitry.

According to a third aspect of the present disclosure, a tramming assist arrangement is provided. The tramming assist arrangement is configured to be comprised in a work machine configured for autonomous tramming and/or remote control tramming at a construction site or as a mining machine in a mine environment. The tramming assist arrangement is further configured to receive range readings from one or more laser range scanners, e.g., laser range scanners, configured to determine a distance from the respective sensor to path barriers present along a path travelled by the tramming work machine. The tramming assist arrangement comprises processing circuitry configured to perform the method according to the first aspect..

According to a fourth aspect of the present disclosure, a work machine is provided. The work machine is configured for autonomous tramming and/or remote control tramming at a construction site or as a mining machine in a mine environment. The mining machine comprises the tramming assist arrangement according to the third aspect.

The above reflected advantages and others are provided also by the computer program code, the tramming assist arrangement, and the work machine.

### BRIEF DESCRIPTION OF THE DRAWINGS

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments.
Figure 1 illustrates a mining work machine comprising a tramming assist arrangement according to the present disclosure
Figure 2 provides a flowchart representation of example method steps performed in a tramming assist arrangement;
Figure 3 discloses an example block diagram of tramming assist arrangement;
Figure 4 a-c discloses a simulated impact of applying the proposed method in an environment suffering from dust contamination.

### DETAILED DESCRIPTION

Aspects of the present disclosure will be described more fully hereinafter with reference to the accompanying drawings. The apparatus and method disclosed herein can, however, be realized in many different forms and should not be construed as being limited to the aspects set forth herein. Like numbers in the drawings refer to like elements throughout.

The terminology used herein is for the purpose of describing particular aspects of the disclosure only, and is not intended to limit the invention. It should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Embodiments of the present disclosure will be described and exemplified more fully hereinafter with reference to the accompanying drawings. The solutions disclosed herein can, however, be realized in many different forms and should not be construed as being limited to the embodiments set forth herein.

In some implementations and according to some aspects of the disclosure, the functions or steps noted in the blocks can occur out of the order noted in the operational illustrations. For example, two blocks shown in succession can in fact be executed substantially concurrently or the blocks can sometimes be executed in the reverse order, depending upon the functionality/acts involved. Also, the functions or steps noted in the blocks can according to some aspects of the disclosure be executed continuously in a loop.

It will be appreciated that when the present disclosure is described in terms of a method, it may also be embodied in one or more processors and one or more memories coupled to the one or more processors, wherein the one or more memories store one or more programs that perform the steps, services and functions disclosed herein when executed by the one or more processors.

In the following description of exemplary embodiments, the same reference numerals denote the same or similar components.

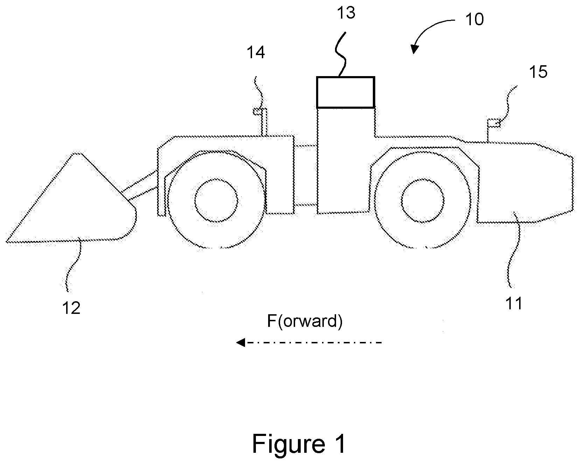

Figures 1 discloses a work machine 10 from a side view. The work machine 10 is configured for tramming in autonomous mode and/or in a remote control mode, e.g., in a construction site environment or as a mining machine in a mine environment or in an underground mine environment. In the context of the present disclosure, tramming means performing a transport operation to relocate from a first position to a second position within the work environment. The remote control mode may be used prior to activating the work machine for tramming in the autonomous mode; following tramming in autonomous mode the remote control mode may be used before ending operation with the work machine or as an intermediate mode prior to re-initiating the autonomous mode. The illustrated work machine 10 is a loader/hauler comprising a vehicle body 11, a bucket 12, and a tramming assist arrangement 13. In the context of the present disclosure, the tramming assist arrangement is capable of localization of the work machine in the work environment and/or of obstacle detection, e.g., to support a collision avoidance functionality implemented in the work machine. The work machine further comprises one or more range detection sensors, e.g., laser range scanners. In the disclosed example, the work machine comprises a front range detection sensor 14 and a rear range detection sensor 15, that are configured to determine a distance from the respective sensor to path barriers present along a path travelled by the work machine during tramming. The one or more range detection sensors are mounted on the work machine, the mounting positions being determined by the intended field of application of the work machine. When mounting the range detection sensors on a machine comprising a bucket or scoop, one range detection sensor may be arranged on top of the work machine, e.g., at a position maintaining a line of sight for the range detection sensor from the vehicle to the surrounding environment also when the bucket is in a lowered position, in a partly lifted position and/or in a lifted position. Further range detection sensors may be provided at a lower part of the work machine so that obstacles on the ground may be detected at times when the bucket is in a partly lifted position and/or in a lifted position, i.e., not obscuring the line of sight for range detection sensor mounted on a lower part of the work machine. Consequently, the mounting of range detection sensors as visualized in Figure 1 is only for general understanding and the below proposed method will be equally applicable regardless of the where the range detection sensor is mounted on the work machine. The one or more range detection sensors 14, 15 may optionally be comprised in the tramming assist arrangement. In addition to such range detection sensors, the tramming assist arrangement may also comprise other type of sensors applicable for use during an autonomous or remote control mode, e.g., image detection sensors.

The present disclosure is in no way limited to a loader/hauler type of work machine 10 as disclosed in Figure 1; the proposed method and arrangement is equally applicable to other types of work machines, as well as to mining machines, such as dumpers, concrete spraying machines, drilling rigs and/or bolting rigs when configured to perform a remotely controlled or autonomous tramming/transportation operation to at least in part relocate from a first operational position to a second operational position, e.g., at a construction site, in a mine environment or in an underground mine environment.

The range detection sensors 14, 15 are laser range scanners configured to measure distances using laser beam technology in given directions and with given angles. The laser range scanners are used to measure the distance to an object/barrier, e.g., a rock wall, a rock, a work machine or any other path barrier along the path travelled by the work machine during tramming. The front range detection sensor 14, e.g., laser range scanner, may be used to obtain range readings, e.g., from a laser scan over a range detection field or segment, to measure a distance to a closest object/barrier in any selected direction in within a range detection field or segment of the range detection sensor, e.g., in a forward direction F as illustrated in Figure 1. In some examples, the laser range scanner will provide range readings for each whole degree ± 90 degrees from the respective longitudinal direction during a scan. Thus, each respective laser range scanner may measure the distance at 181 respective measurement points. As will be understood, it is possible to use laser range scanners which measure distance, obtain range readings, at a significantly higher resolution or at a significantly lower resolution. It is also possible to use laser range scanners which obtain range readings in a significantly wider direction, as well as those which measure distance in a more narrow direction. It is also possible to use a single omnidirectional range detection sensor to determine distance in any travelling direction of the vehicle or a rotating range detection sensor. In some examples a range detection sensor may be configured to repeatedly obtain range readings to determine distances in a narrower field of view, e.g., covering a field of view representing 30-45 degrees on each side of reference line representing the travelling direction of the work machine. Furthermore, the measurement points representing range readings from a range detection sensor on the vehicle may be performed with a higher resolution than the above suggested whole degree approach, e.g., providing the above suggested number of measurement points from within a range of 60-90 degrees. Moreover, each range detection sensor may be configured to obtain range readings reflecting distances in a cone shaped air space centred around, and propagating from the respective range detection sensor.

In some examples, the field covered by the range detection sensor is a range reading segment, e.g., reflecting a range detection field of ±90°. The range reading segment may divided into two or more sub-segments each covering a configurable angle range of the range detection field. The sub-dividing of the range detection sensor into sub-segments is preferably achieved by associating obtained range readings to sub-segments; thus, any dividing into sub-segments is preferably performed during processing of the range readings in processing circuitry of a tracking assist arrangement. The range detection field may be subdivided into 4 sub-segments of 45°, 6 sub-segments of 30°, or any other suitable configuration of sub-segments to enable a more precise analysis of a range detection capability in the range detection sensors. In some example, a front facing sub-segment of ±30° is provided, surrounded by two left hand side sub-segments of 30° and two right hand side sub-segments of 30°. Since the dividing into sub-segments is configurable, the sub-segments may be amended on a need basis.

In one example, a single sub-segment is applied; associating range readings within a specified, e.g., narrow, angle range of the range detection field or segment to the single sub-segment. The single sub-segment may be symmetrically configured around a centric range reading that is shifted between consecutively obtained sets of range readings. Consequently, the full range detection field of the range detection sensor may be diagnosed by repeated diagnosing of a subset of range readings, the subset being shifted over the range detection field for the sensor. Considering the scenario of a laser range scanner, a laser scans reflecting an angle range of 10-60°, preferably 25-35° may be processed in the tramming assist arrangement in a procedure where a centric range reading is shifted throughout at least part of the full range detection field. In this way, the diagnosing made in the processing circuitry of the tramming assist arrangement will be demand less processing resources and a high accuracy result may be achieved based on an assessment using only a subset of the obtained range readings.

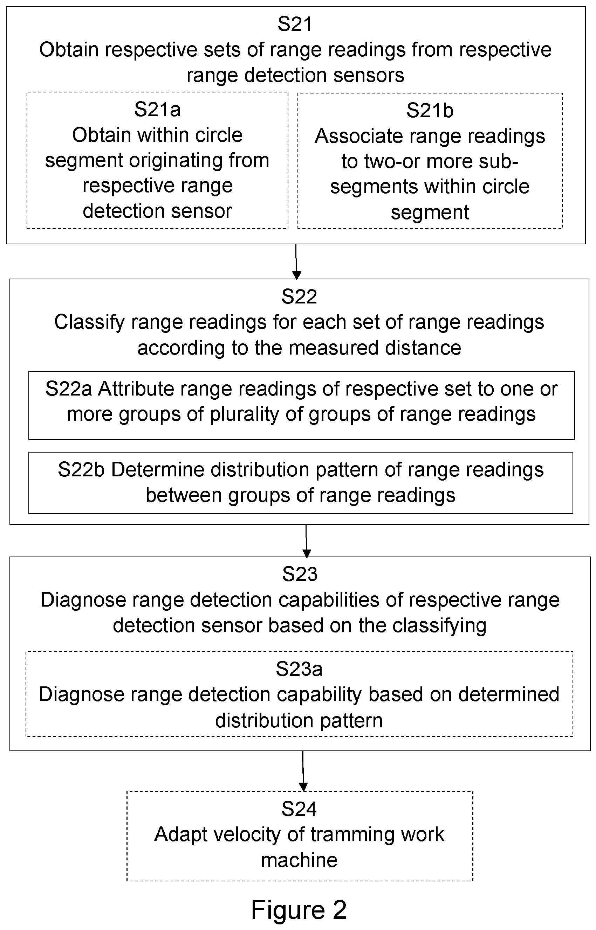

The method described below with reference to Figure 2, is applicable also to diagnosing range detection capability in such sub-segments as will be explained below; the associating of range readings into such sub-segments may be configured from the tramming assist arrangement.

The range readings may be retrieved with a set, predetermined or configurable, periodicity, e.g., repeating a scanning operation once every other minute, once every minute, or much more frequently. The scanning operation may also be adapted to a speed of the work machine, so that a default number of range readings are obtained when the work machine travels with at default speed, while more frequent range readings are obtained when the work machine travels at higher speed. In some examples, range readings are first obtained in a first scanning direction of the range detection sensor, whereupon the scanning operation is repeated from another direction, e.g., performing the scanning in a reverse direction or any other suitable direction. In some examples, range readings may be obtained every 5-80 ms, preferably every 10-20 ms, e.g., at a frequency of 75Hz. The periodicity/frequency for obtaining range readings from the range detection sensors may also be varied depending on a visibility for the range detection sensors, operational information for the work machine, e.g., a loading operation performed with the bucket, or a velocity of the work machine 10 when performing the tramming operation. In some examples, the granularity for range readings in time and space is configurable by the operator, e.g., by providing instructions through a user interface to the tramming assist arrangement.

In some examples, the range detection sensor is selected from a group of Sonar, Lidar, and Radar sensors.

The range detection sensors and associated range detection techniques are used to provide range readings to processing circuitry in the tramming assist arrangement 13 of the work machine 10. As previously explained, the tramming assist arrangement is capable of localization of the work machine in the work environment and/or of obstacle detection, e.g., to support a collision avoidance functionality implemented in the work machine. Thus, the range readings may be processed to determine an allowed travel route or allowed two-dimensional travel space of the work machine. The range readings may also be processed to determine objects or path barriers present along a path travelled by the work machine. Furthermore, the range readings may be mapped to reference readings in order to locate the work machine along a predetermined or pre-recorded route. Thus, tramming assist of a work machine at a construction site or within a mine tunnel may at least in part involve a determining of distances to path barriers, e.g., tunnel walls or other obstacles along the path, e.g., during autonomous tramming of a work machine or during remotely controlled tramming.

In the work environment, e.g., at a construction site or in a mine environment - an underground mine environment or open pit mine environment, range readings from a range detection sensor may be affected by dirt on a lens of the sensor or by pollution in an ambient air, e.g., from dust particles. The dirty lens or the polluted air, may affect the accuracy of the range readings provided by the range detection sensor, e.g., laser scanner. These range readings may be disregarded so that they do not affect the tramming operation of the work machine in a negative manner. However, when disregarding range readings, caution must be exercised so that the tramming assist functionality is not negatively impacted. Historically, allowing or disallowing continued tramming of the work machine has been based on a count of valid readings in the set of range readings, e.g., comparing the count of valid readings to an empirically determined threshold value. However, while ensuring high operational safety during autonomous or remote control tramming of work machines, the count based method may result in tramming operations being prematurely discontinued. Such premature discontinuation of the tramming operation may have significant impact in terms of production loss and undue operational expenses; each discontinued operation requiring operator attention at the location of the work machine. Furthermore, the count/threshold based method does not provide the opportunity to predict maintenance and cleansing needs based on an understanding of how the range detection capabilities may deteriorate over time and during use. Thus, the present disclosure addresses a need to diagnose the range detection capabilities of the range detection sensors with high confidence to improve the operating capability of the autonomous/remotely controlled work machine without comprising safety at the construction site, in the mine environment, or in the underground mine environment. Furthermore, there is a remaining need to perform such diagnosing in a repetitive manner to be able to predict the need for cleansing or maintenance of range detection sensors used in a work machine; thereby reducing the risk of undue operational stops. The disclosed method provides for improvements in validating sensor data taking a challenging environmental context into account. By diagnosing range detection capabilities based on a classification of obtained range readings, e.g., by analysing the distribution of valid readings within an obtained set of range readings, it is possible to determine if the obtained set of range readings contains enough information to reliably estimate a machine position within the environment or to detect an obstacle within the environment. The disclosed method further has the advantage of allowing improvements to maintenance planning for such tramming assist arrangements; avoiding undue stops during scheduled work shifts without compromising safety. Moreover the disclosed method has the advantage that it can be easily implemented in existing mining machines.

Turning to Figure 2, a method for diagnosing range detection sensor, e.g., laser range scanner, capability and functionality is schematically disclosed. The method will be explained in detail below with reference to the flow chart representation of example method steps depicted in Figure 2. The method may be performed in the work machine disclosed in Figure 1. The example method steps are performed by tramming assist arrangement 13 comprised in the work machine 10.

As discussed with reference to Figure 1, the work machine 10 is configured for autonomous tramming and/or remote control tramming/transportation in a work environment, e.g., at a construction site, in a mine environment, or in an underground mine environment. In the context of the present disclosure, tramming means performing a transport operation to relocate from a first position to a second position within the work environment. The work machine may be configured to travel at a certain speed in a forward or backward direction, e.g., tramming at a default tramming velocity. The work machine comprises one or more range detection sensors 14, 15 configured to provide range readings to a tramming assist arrangement 13. As previously explained, the tramming assist arrangement 13 is capable of localization of the work machine 10 in the work environment and/or of obstacle detection, e.g., to support a collision avoidance functionality implemented in the work machine. The tramming assist arrangement 13 is configured to determine a distance from the respective sensor 14, 15 to any path barriers present along a path travelled by the work machine during tramming.

The disclosed method comprises the step S21 of obtaining respective sets of range readings, from a laser scan over a range detection field or segment, from respective laser range scanners; each range reading comprising a measured distance. Thus, each range reading reflects a distance between the respective range detection sensor and any path barrier present along the path travelled by the work machine during tramming. Each range detection sensors may be configured to obtain S21a respective set of range readings in a range reading segment having an origin at the range detection sensor, e.g., centred around a mid-positioned range reading from a laser scanner. Turning back to the scenario discussed in the presentation of Figure 1 and applying a scanning operation with a laser range scanner, the range reading segment may represent a laser scan over a maximum scanning range for the laser scanner. In some examples, the range reading segment may represent an angle range of approximately ±80°, ±90°, or ±100°.

In some examples, the field covered by the range detection sensor is a range reading segment corresponding to a semicircle, e.g., reflecting a range detection field of ±90°. Thus the obtained set of range readings may comprise range readings from a range reading segment corresponding to the range detection field of ±90°. In some examples, range readings of an obtained set of range readings are associated S21b to at least one sub-segment within the range reading segment, i.e., the range reading segment may or may not be divided into at least one sub-segment, the dividing into sub-segments achieved by associating range readings to one or more sub-segments.

In some examples, the obtained set of range readings may be associated S21b to a plurality of adjacent sub-segments within the range reading segment. Thus, the range reading segment may be associated to two or more sub-segments each covering a configurable angle range of the range detection field. The range detection field may be subdivided into 4 sub-segments of 45°, 6 sub-segments of 30°, or any other suitable configuration of sub-segments to enable a more precise analysis of the results provided form the range detection sensors. In some example, a front facing sub-segment of ±30° is provided, surrounded by two left hand side sub-segments of 30° and two right hand side sub-segments of 30°. Since the dividing into sub-segments is configurable, the sub-segments may be amended on a need basis.

In some embodiments, classifying range readings for each set of range readings comprises attributing the range readings of respective sets of range readings to one or more groups of a plurality of groups of range readings, wherein one or more range readings are attributed to a first group of range readings. Range readings indicating a measured distance above or below a threshold value may for example be attributed to the first group of range readings. A distribution pattern is determined, wherein the distribution pattern may reflect a threshold based distribution of range readings to a plurality of groups of range readings, and wherein the distribution pattern identifies at least a distribution of range readings attributed to the first group of range readings. Diagnosing of the range detection capability of respective range detection sensors may be performed based on the determined distribution pattern.

In some embodiments, the obtaining of the set of range readings comprises obtaining each respective set of range readings within a range reading segment having an origin at the respective range detection sensor and associating range readings of the obtained set of range readings to at least one sub-segment within the range reading segment. The obtained set of range readings, may be classified according to their associating to respective one or more sub-segments. The associating of the range readings to respective sub-segments provides the advantage of allowing a diagnosing with a higher resolution, i.e., to diagnose deficiencies in a specified sub-segment of a range detection sensors; and to combine a knowledge of such a deficiency with diagnosing from other range detection sensors to diagnose a range detection capability for a work machine as a whole.

In some embodiments, the associating of the obtained set of range readings comprises associating the range readings to a plurality of adjacent sub-segments within the range reading segment.

In some embodiments, the step of obtaining respective sets of range readings may be repetitively performed for a range detection sensor. Range readings from consecutively obtained sets of range readings for a range detection sensor may be associated to respective single sub-segments, the sub-segment being symmetrically configured around a centric range reading that is shifted between the consecutively obtained sets of range readings. Classifying of the range readings may be performed using the consecutively obtained sets of range readings.

In one example, the step of obtaining respective sets of range readings may be repetitively performed and range readings from consecutively obtained sets of range readings for a range detection sensor may be associated S21b to a single sub-segments, the sub-segment being symmetrically configured around a centric range reading that is shifted between the consecutively obtained sets of range readings. Range readings from consecutively obtained sets of range readings may be associated to the single sub-segment; the sub-segment being symmetrically configured around a centric range reading that is shifted between the consecutively obtained sets of range readings. When a single sub-segment is considered; the associating S21b of range readings into the single sub-segment may comprise associating the range readings of a specified angle range to the single sub-segment, e.g., a range of 10-60°, preferably 25-35°, as previously described. The single sub-segment may be symmetrically configured around a centric range reading that is shifted between consecutively obtained sets of range readings.

In step S22, range readings are classified for each set of range readings according to the measured distance. Optionally, the step of classifying S22 the range readings comprises classifying the range readings in their respective sub-segments. Thus, the classifying may result in a classifying based on a combination of measured distance and angle range; thereby enabling a higher resolution in the result from the diagnosing of the range detection capabilities.

In some examples, classifying range readings for each set of range readings comprises attributing the range readings of respective sets of range readings to one or more groups of a plurality of groups of range readings, wherein one or more range readings are attributed to a first group of range readings. Range readings indicating a measured distance above or below a threshold value may for example be attributed to the first group of range readings. A distribution pattern is determined, wherein the distribution pattern may reflect a threshold based distribution of range readings to a plurality of groups of range readings, and wherein the distribution pattern identifies at least a distribution of range readings attributed to the first group of range readings. Diagnosing of the range detection capability of respective range detection sensors may be performed based on the determined distribution pattern.

The obtaining of the set of range readings comprises obtaining each respective set of range readings within a range reading segment having an origin at the respective range detection sensor and associating range readings of the obtained set of range readings to at least one sub-segment within the range reading segment. The obtained set of range readings, may be classified according to their associating to respective one or more sub-segments. The associating of the range readings to respective sub-segments provides the advantage of allowing a diagnosing with a higher resolution, i.e., to diagnose deficiencies in a specified sub-segment of a range detection sensors; and to combine a knowledge of such a deficiency with diagnosing from other range detection sensors to diagnose a range detection capability for a work machine as a whole.

In some examples, the associating of the obtained set of range readings comprises associating the range readings to a plurality of adjacent sub-segments within the range reading segment. In some examples, the step of obtaining respective sets of range readings may be repetitively performed for a range detection sensor. Range readings from consecutively obtained sets of range readings for a range detection sensor may be associated to respective single sub-segments, the sub-segment being symmetrically configured around a centric range reading that is shifted between the consecutively obtained sets of range readings. Classifying of the range readings may be performed using the consecutively obtained sets of range readings.

The disclosed method has the advantage of improving accuracy and consistency for existing tramming assist arrangements, e.g., as used in a mining machine in mine environment or in a work machine used in a construction site environment. The disclosed method provides for improvements in validating sensor data taking a challenging environmental context into account; to determine if the data from one or more range detection sensors comprises enough information to reliably estimate a machine position within the environment or to reliably estimate an obstacle position in the environment. Thus, it is possible to determine, range detection capabilities for each range detection sensor, and to diagnose where in the field of view the sensor has a capability of performing range detection with full or sufficient visibility to provide accurate readings of the surroundings. Diagnosing based on the classifying will depend on whether the diagnosing is based on a range reading segment corresponding to a full range detection field of the sensor or a range reading segment reflecting a sub-segment of the full range detection field. If a threshold based classifying is used and a wide range detection segment is covered, a high number/high share percentage of valid readings within the segment may be required to diagnose the range detection capability of the sensor as sufficient, i.e., that the sensor has visibility in the particular segment. When the diagnosing is performed for a sub-segment, the range detection capability may be considered sufficient also for a lower share percentage of valid readings. The share of valid range readings may be dependent on an application/operation performed by the work machine and also on a required reliability and robustness that may be configurable by an operator.

Proper, improper or dubious range readings of the at least one range detection sensor, e.g., laser range scanner, may be asserted based on the classifying. According to the invention as claimed, diagnosing of the range detection capabilities of respective sensors is performed by analysing a distribution pattern of the various range readings, as obtained from a laser scan over a range detection field or segment, to the respective groups, e.g., by applying a pattern recognition algorithm to a distribution pattern resulting from the classifying of range readings according to measured distance. In some examples, the obtained set of range readings may be compared to a one or more predetermined or pre-learned sets of range readings reflecting a same location in the mine environment. Anomalies in the obtained set of range readings may be determined from the predetermined or pre-learned sets of range readings, enabling a diagnosing of the current range detection capability of the range detection sensor, e.g., diagnosing the capability in one or more sub-segments of the range detection sensor. In some examples, classifying the range readings comprises grouping the range readings based on measured distance. Range readings reflecting a measured distance below a configurable, e.g., predetermined, minimum value are classified as belonging to a first group of range readings, comprising, invalid range readings reflecting distances shorter than an allowable minimum distance. Range readings comprising measured distances reflecting a maximum distance measurable by the range detection sensor are classified as belonging to respective second groups of range readings, and range readings comprising measured distances within a configurable, e.g., predetermined, interval may be classified as belonging to a third group.

Classifying range readings comprises classifying range readings of each set of range readings according to the measured distance. The classifying is achieved by attributing the obtained range readings into groups of range readings according to their respective sets. Thus, the range readings of respective sets of range readings are attributed S22a to a plurality of groups of range readings. In some examples, the groups may be configured to represent a typical outcome of a range detection sensor providing inaccurate readings due to dirt or dust.

Range readings are classified as reflecting a measured distance shorter than a configurable minimum distance, reflecting a measured distance longer than a configurable maximum distance, or classified as reflecting measured distances within a configurable interval. Range readings reflecting a measured distance below a configurable, e.g., predetermined, minimum value are attributed S22a to respective groups of range readings reflecting short distances. The groups of range readings comprises a first group of invalid range readings, i.e. range readings reflecting distances shorter than an allowable minimum distance. Range readings comprising measured distances reflecting a maximum distance measurable by the range detection sensor are attributed to a respective second group of range readings, and range readings comprising measured distances within a configurable, e.g., predetermined, interval are attributed to a third group.

The attributing provides for a grouping or sorting operation whereby values outside of an allowable range may be identified for further analysis. In some examples, it has been established that range readings <0.1 m usually reflect a dirty lens, while range readings within the contour of the machine, e.g., less than 1m, reflects dust in the air. Dust in the air may also result in range readings indicating a maximum distance measurable with the range detection sensor. For such a scenario, range readings reflecting a distance shorter than 0.1 m are attributed to the first group; range readings reflecting a maximum distance measurable by the range detection sensor are attributed to a second group, and range readings indicating a distance within the contour of the work machine, e.g., in the interval of 0.1 m to 1 m, are attributed to a third group. Consequently, values defining the attribution criteria for the first, second, and third groups of range readings may be selected to represent a typical outcome of a range detection sensor providing inaccurate readings due to dirt or dust.

In step S22b, the distribution of range readings within the obtained set of range readings is determined, e.g., by assessing the number of readings attributed to the respective groups. The determined distribution pattern identifies a distribution of range readings attributed to the respective groups of range readings. Thus, when so called valid range readings are attributed to a default group and range readings reflecting a measured distance below a configurable, e.g., predetermined, minimum value, are attributed to a first group of range readings, the determined distribution pattern, e.g., number of consecutive range readings attributed to the default group and/or to the first group, represents a distribution pattern that may be used to diagnose the range detection capabilities of the respective range detection sensor.

Proper, improper or dubious range readings of the at least one range detection sensor may be asserted based on the classifying, i.e., diagnosing S23 range detection capability of the at least one range detection sensor based on the classifying. In some embodiments, classifying range readings for each set of range readings comprises attributing the range readings of respective sets of range readings to one or more groups of a plurality of groups of range readings, wherein one or more range readings are attributed to a first group of range readings. Range readings indicating a measured distance above or below a threshold value may for example be attributed to the first group of range readings. A distribution pattern is determined, wherein the distribution pattern may reflect a threshold based distribution of range readings to a plurality of groups of range readings, and wherein the distribution pattern identifies at least a distribution of range readings attributed to the first group of range readings. Diagnosing of the range detection capability of respective range detection sensors may be performed based on the determined distribution pattern.

In some examples, an analysis of the distribution of valid range readings within an obtained set of range readings may be used to determine if the obtained set of range readings contains enough information to reliably base an estimate of the machine position within the work environment based on the obtained set of range readings. In some examples, the diagnosing reflects a range detection capability of a sub-segment of the range detection sensor as disclosed above. The diagnosing may be made by determining a distribution pattern relevant for the sub-segment, e.g., a number or share of valid readings associated with the sub-segment. The determining of the distribution pattern may also comprise an assessment of a number of consecutive, valid readings, e.g., a distribution pattern between valid readings attributed to a first group and readings attributed to one or more further groups in the plurality of groups. Diagnosing S23 of the range detection capability may be made by diagnosing S23a the range detection capability of the respective range detection sensor based on a determined distribution pattern. An analysis of the distribution of valid range readings from an obtained set of range readings may be used to determine that sufficient tramming assist and navigation data is available to reliably estimate a position of the work machine during autonomous or remotely controlled tramming. In some examples, improper function of the at least one range detection sensor is diagnosed when the determined distribution pattern deviates from a reference distribution of range readings attributed to the first group. In some examples, the diagnosing is performed by applying a pattern recognition algorithm to the distribution pattern. Repeated diagnosing of the range detection capabilities may be used to determine how a progressive build-up of contamination on the range detection sensor and to use the diagnosing in the scheduling of maintenance for the work machine.

Turning back to the example wherein the obtained set of range readings within the range detection field, i.e., the range reading segment, are associated to a single sub-segment, a high accuracy diagnosing may be achieved based on a processing operation applied only to a subset of each obtained set of range readings. The full range detection field of the range detection sensor may be diagnosed by repeated diagnosing of a subset of range readings, the subset being shifted over the range detection field for the sensor. Considering the scenario of a laser range scanner, a laser scans reflecting an angle range of 10-60°, preferably 25-35° may be processed in the tramming assist arrangement in a procedure where a centric range reading is shifted throughout at least part of the full range detection field. In this way, the diagnosing made in the processing circuitry of the tramming assist arrangement will be demand less processing resources and a high accuracy result may be achieved based on an assessment using only a subset of the obtained range readings.

In some examples, the tramming assist arrangement is configured to apply the result from the diagnosing in the controlling of the tramming operation, e.g., adapting S24 a velocity of the tramming mining machine based on the diagnosing, e.g., allowing an increased velocity when the diagnosing indicates full functionality of the range detection sensors, and reducing the velocity when the diagnosing indicates impaired function of the at least one range detection sensor. The autonomous or remotely controlled tramming operation may also be stopped to reduce the risk of machine collision with the walls due to poor tramming assist.

In some examples, the range detection sensor is a laser range scanner and wherein the set of range readings comprises range measurements performed during a scan. The scan may have an angle range corresponding to the angle range of the range detection sensor and with a resolution provided by the range detection sensor over a period of time required for at least one full scan of the range detection sensor, e.g. during 5-120 ms, preferably 10-20 ms. The laser scan may cover a full visual field of the range detection sensor or parts of the visual field of the range detection sensor. In other examples, the set of range readings comprises a subset of range readings reflecting a set, e.g., predetermined or configurable, segment of the visual field of the range detection sensor. In further examples, the set of range readings comprises range readings retrieved during multiple laser scans.

In some examples, the method comprises repeating the steps for an obtained further set of range readings and, e.g., resuming a default tramming velocity in the autonomous and/or remote control mode when the diagnosing of range detection capabilities no longer indicates a need to adapt the velocity.

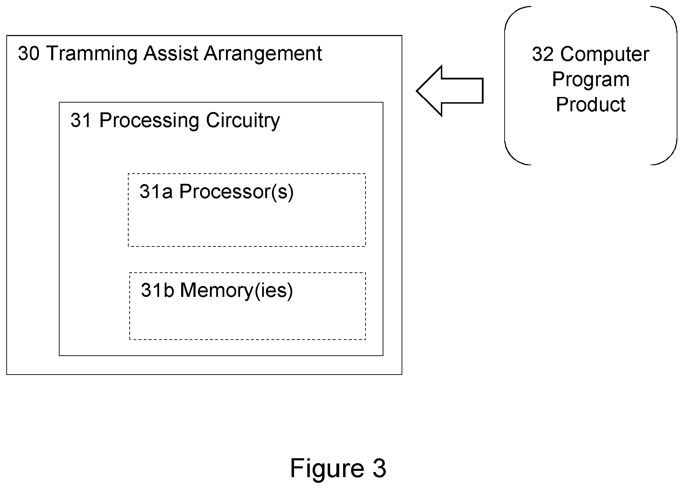

Turning to Figure 3, a schematic block diagram illustrating a tramming assist arrangement 30, e.g., the tramming assist arrangement 13 as comprised in the work machine 10 of Figure 1.

The tramming assist arrangement may be comprised in the work machine as illustrated in Figure 1. The tramming assist arrangement 30 is configured to perform the above disclosed method. The tramming assist arrangement comprises processing circuitry 31 configured to obtain a set of range readings from at least one range detection sensor, e.g., laser range scanner, and to diagnose a range detection capability of the range detection sensor based on the obtained set of range readings and a determined distribution pattern of these range readings. The processing circuitry may comprises a processor 31a and a memory 31b. Figure 3 further illustrates an example computer program product 32 having thereon a computer program comprising instructions. The computer program product comprises a computer readable medium such as, for example a universal serial bus (USB) memory, a plug-in card, an embedded drive or a read only memory (ROM). The computer readable medium has stored thereon a computer program comprising program instructions that are loadable into the processing circuitry 31, e.g., into the memory 31b. The program instructions may be executed by the processor 31a to perform the above disclosed method.

Thus, the computer program is loadable into data processing circuitry, e.g., into the processing circuitry 31 of Figure 3, and is configured to cause execution of embodiments for diagnosing range detection capability of the at least one range detection sensor.

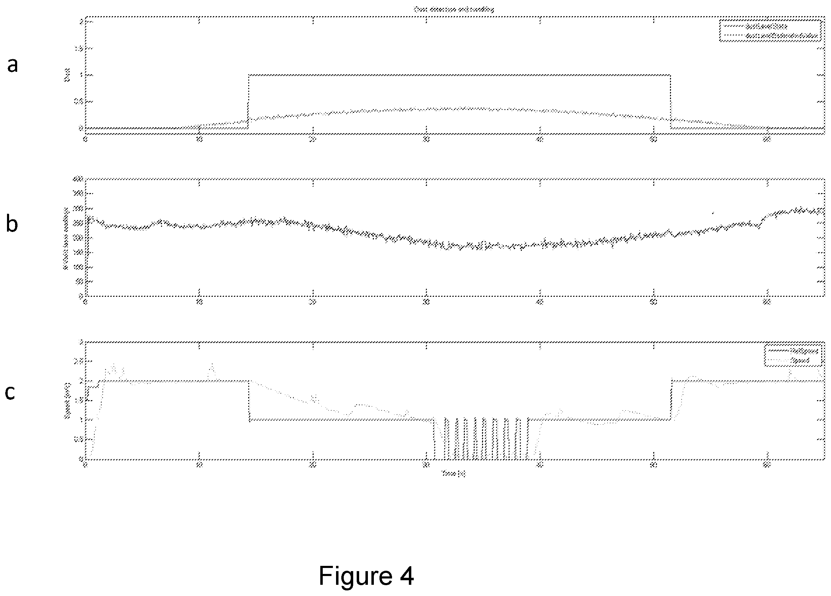

Figure 4 a-c reflects the improvements to dust detection using the above presented method, i.e., illustrating how diagnosing of the range detection capability of a range detection sensor may be used to improve more accurately control a tramming operation wherein a range detection sensor, i.e., laser range scanner, is used in the localization of the work machine. Figure 4a illustrates an estimated dust level and classification of dust state in terms of low and medium. The low level is represented by the numerical value 0 and a medium dust level is represented by the numerical value 1. Figure 4b illustrates valid range readings from laser range scanner serving as the range detection sensor in the represented scenario. Figure 4c illustrates a reference speed and measured speed of the work machine. In the visualized scenario, the reference speed of the work machine is reduced from a normal speed of 2m/s to 1 m/s when the level of dust increases to a medium value, i.e., when the level of dust impact is diagnosed to be above a threshold level, e.g., a predetermined threshold level. When the classifying of range readings based on measured distance results in an insufficient total number of valid range readings or a distribution of valid range readings indicating a deficient capability of the range detection sensor in at least part of a range detection segment, autonomous tramming may be stopped. In a basic implementation, the distribution pattern is taken to reflect a number of having a value below a threshold value.

The description of the example embodiments provided herein have been presented for purposes of illustration. The description is not intended to be exhaustive or to limit example embodiments to the precise form disclosed; modifications and variations are possible in light of the above teachings or may be acquired from practice of various alternatives to the provided embodiments. The examples discussed herein were chosen and described in order to explain the principles and the nature of various example embodiments and its practical application to enable one skilled in the art to utilize the example embodiments in various manners and with various modifications as are suited to the particular use contemplated. The features of the embodiments described herein may be combined in all possible combinations of source nodes, target nodes, corresponding methods, and computer program products. It should be appreciated that the example embodiments presented herein may be practiced in combination with each other.

The described embodiments and their equivalents may be realized in software or hardware or a combination thereof. The embodiments may be performed by general purpose circuitry. Examples of general purpose circuitry include digital signal processors (DSP), central processing units (CPU), co-processor units, field programmable gate arrays (FPGA) and other programmable hardware. Alternatively or additionally, the embodiments may be performed by specialized circuitry, such as application specific integrated circuits (ASIC). The general purpose circuitry and/or the specialized circuitry may, for example, be associated with or comprised in an apparatus such as a wireless communication device or a network node.

Embodiments may appear within an electronic apparatus comprising arrangements, circuitry, and/or logic according to any of the embodiments described herein. Alternatively or additionally, an electronic apparatus may be configured to perform methods according to any of the embodiments described herein.

Generally, all terms used herein are to be interpreted according to their ordinary meaning in the relevant technical field, unless a different meaning is clearly given and/or is implied from the context in which it is used.

## Claims

1. A computer-implemented method for diagnosing range detection capabilities of one or more laser range scanners comprised in a tramming assist arrangement of a mining machine (10) configured for autonomous tramming and/or remote control tramming in an underground mine environment; the one or more laser range scanners (14, 15) configured to determine distances from the respective laser range scanner to path barriers present along a path travelled by the mining machine during tramming; the method comprising:
- obtaining (S21) respective sets of range readings from respective laser range scanners; each range reading comprising a measured distance, wherein each respective set of range readings is obtained (S21a) within a range reading segment having an origin at the respective laser range scanner, wherein the range reading segment is divided into two or more sub-segments each covering a configurable angle range of a range detection field covered by the respective laser range scanner, and wherein range readings of the obtained set of range readings are associated to the two or more sub-segments within the range reading segment;
- classifying (S22) range readings in their respective sub-segments for each obtained set of range readings according to the measured distance by attributing (S22a) the range readings of respective sets of range readings to a plurality of groups of range readings, wherein one or more range readings are attributed to a first group of range readings, and determining (S22b) a distribution pattern of range readings between the plurality of groups of range readings, wherein the determined distribution pattern identifies a distribution of range readings attributed to the first group comprising distances shorter than a configurable minimum distance, being invalid range readings reflecting distances shorter than an allowable minimum distance; wherein determining a distribution pattern of range readings further comprises determining a distribution pattern of range readings attributed to a second and third group within the set of range readings,
wherein the determined distribution pattern identifies a distribution of range readings attributed to the second group comprising a measured distance longer than a configurable maximum distance, and
wherein the determined distribution pattern identifies a distribution of range readings attributed to the third group comprising measured distances within an interval between the minimum and maximum distance; and
- diagnosing (S23) range detection capabilities of the respective laser range scanner based on the determined distribution pattern.

2. The method of any claim 1, wherein associating (S21b) the obtained set of range readings comprises associating the obtained set of range readings for a laser range scanner to a plurality of adjacent sub-segments within the range reading segment.

3. The method of any of claims 1 to 2, the method further comprising:
- repetitively performing the step of obtaining respective sets of range readings;
- associating (S21b) range readings from consecutively obtained sets of range readings for a laser range scanner to respective single sub-segments, the sub-segment being symmetrically configured around a centric range reading that is shifted between the consecutively obtained sets of range readings; and
- classifying (S22) the range readings from consecutively obtained sets of range readings.

4. The method of any of the preceding claims, wherein diagnosing the range detection capability of the at least one laser range scanner comprises:
- diagnosing range detection capabilities of the respective laser range scanner to be erroneous when the determined distribution pattern deviates from a reference distribution of range readings attributed to the first group.

5. The method of any of the preceding claims, further comprising:
- adapting (S24) velocity of the tramming mining machine based on the diagnosing of the range detection capability.

6. A tramming assist arrangement (30) comprised in a mining machine (10) configured for autonomous tramming and/or remote control tramming in an underground mine environment; the tramming assist arrangement configured to receive range readings from one or more laser range scanners configured to determine a distance from the respective sensor to path barriers present along a path travelled by the tramming mining machine, the tramming assist arrangement comprising processing circuitry (31) configured to:
- obtain respective sets of range readings from respective laser range scanners; each range reading comprising a measured distance, wherein each respective set of range readings is obtained (S21a) within a range reading segment having an origin at the respective laser range scanner, wherein the range reading segment is divided into two or more sub-segments each covering a configurable angle range of a range detection field covered by the respective laser range scanner, and wherein range readings of the obtained set of range readings are associated to the two or more sub-segments within the range reading segment;
- classify range readings in their respective sub-segments for each obtained set of range readings according to the measured distance by attributing (S22a) the range readings of respective sets of range readings to a plurality of groups of range readings, wherein one or more range readings are attributed to a first group of range readings, and determining (S22b) a distribution pattern of range readings between the plurality of groups of range readings, wherein the determined distribution pattern identifies a distribution of range readings attributed to the first group comprising distances shorter than a configurable minimum distance, being invalid range readings reflecting distances shorter than an allowable minimum distance,
wherein determining a distribution pattern of range readings further comprises determining a distribution pattern of range readings attributed to a second and third group within the set of range readings,
wherein the determined distribution pattern identifies a distribution of range readings attributed to the second group comprising a measured distance longer than a configurable maximum distance, and
wherein the determined distribution pattern identifies a distribution of range readings attributed to the third group comprising measured distances within an interval between the minimum and maximum distance; and
- diagnose a range detection capability of the at least one laser range scanner based on the determined distribution pattern.

7. A mining machine (10) configured for autonomous tramming and/or remote control tramming in an underground mine environment, the mining machine comprising at least one laser range scanner (14, 15) and a tramming assist arrangement (13) according to claim 6.

8. A computer program product comprising a non-transitory computer readable medium having thereon a computer program comprising program instructions loadable into the processing circuitry of claim 6 and configured to cause execution of the method according to any of claims 1-5 when the computer program is run by the processing circuitry of claim 6.

## Patentansprüche

1. Computerimplementiertes Verfahren zum Diagnostizieren von Entfernungsdetektionsfähigkeiten eines oder mehrerer Laserentfernungsmesser, die in einer Tramming-Assistenzanordnung einer Bergbaumaschine (10) enthalten sind, die für autonomes Tramming und/oder Fernsteuer-Tramming in einer unterirdischen Bergbauumgebung ausgebildet ist; wobei der eine oder die mehreren Laserentfernungsmesser (14, 15) dazu ausgebildet sind, Abstände von dem jeweiligen Laserentfernungsmesser zu Pfadbarrieren zu bestimmen, die entlang eines durch die Bergbaumaschine während Trammings zurückgelegten Pfads vorhanden sind; das Verfahren umfassend:
- Erhalten (S21) von jeweiligen Sätzen von Entfernungsmesswerten von jeweiligen Laserentfernungsmessern; wobei jeder Entfernungsmesswert einen gemessenen Abstand umfasst, wobei jeder jeweilige Satz von Entfernungsmesswerten innerhalb eines Entfernungsmesswertsegments erhalten (S21a) wird, das einen Ursprung an dem jeweiligen Laserentfernungsmesser aufweist, wobei das Entfernungsmesswertsegment in zwei oder mehr Untersegmente unterteilt ist, von denen jedes einen konfigurierbaren Winkelbereich eines durch den jeweiligen Laserentfernungsmesser abgedeckten Entfernungsdetektionsfelds abdeckt, und wobei die Entfernungsmesswerte des erhaltenen Satzes von Entfernungsmesswerten den zwei oder mehr Untersegmenten innerhalb des Entfernungsmesswertsegments zugeordnet werden;
- Klassifizieren (S22) von Entfernungsmesswerten in ihre jeweiligen Untersegmente für jeden erhaltenen Satz von Entfernungsmesswerten gemäß dem gemessenen Abstand durch Zuweisen (S22a) der Entfernungsmesswerte von jeweiligen Sätzen von Entfernungsmesswerten zu einer Vielzahl von Gruppen von Entfernungsmesswerten, wobei ein oder mehrere Entfernungsmesswerte einer ersten Gruppe von Entfernungsmesswerten zugewiesen werden, und Bestimmen (S22b) eines Verteilungsmusters von Entfernungsmesswerten zwischen der Vielzahl von Gruppen von Entfernungsmesswerten, wobei das bestimmte Verteilungsmuster eine Verteilung von Entfernungsmesswerten, die der ersten Gruppe zugewiesen werden, identifiziert, die Abstände umfasst, die kürzer als ein konfigurierbarer Mindestabstand sind, die ungültige Entfernungsmesswerte sind, die Abstände widerspiegeln, die kürzer als ein zulässiger Mindestabstand sind; wobei Bestimmen eines Verteilungsmusters von Entfernungsmesswerten weiter Bestimmen eines Verteilungsmusters von Entfernungsmesswerten umfasst, die einer zweiten und einer dritten Gruppe innerhalb des Satzes von Entfernungsmesswerten zugewiesen werden,
wobei das bestimmte Verteilungsmuster eine Verteilung von Entfernungsmesswerten, die der zweiten Gruppe zugewiesen werden, identifiziert, die einen gemessenen Abstand umfasst, der länger als ein konfigurierbarer Höchstabstand ist, und
wobei das bestimmte Verteilungsmuster eine Verteilung von Entfernungsmesswerten, die der dritten Gruppe zugewiesen werden, identifiziert, die gemessenen Abstände innerhalb eines Intervalls zwischen dem Mindest- und dem Höchstabstand umfasst; und
- Diagnostizieren (S23) von Entfernungsdetektionsfähigkeiten des jeweiligen Laserentfernungsmessers basierend auf dem bestimmten Verteilungsmuster.

2. Verfahren nach Anspruch 1, wobei Zuordnen (S21b) des erhaltenen Satzes von Entfernungsmesswerten Zuordnen des erhaltenen Satzes von Entfernungsmesswerten für einen Laserentfernungsmesser zu einer Vielzahl von benachbarten Untersegmenten innerhalb des Entfernungsmesswertsegments umfasst.

3. Verfahren nach einem der Ansprüche 1 bis 2, das Verfahren weiter umfassend:
- wiederholtes Durchführen des Schritts zum Erhalten von jeweiligen Sätzen von Entfernungsmesswerten;
- Zuordnen (S21b) von Entfernungsmesswerten aus aufeinanderfolgend erhaltenen Sätzen von Entfernungsmesswerten für einen Laserentfernungsmesser zu jeweiligen einzelnen Untersegmenten, wobei das Untersegment symmetrisch um einen zentralen Entfernungsmesswert herum ausgebildet wird, der zwischen den aufeinanderfolgend erhaltenen Sätzen von Entfernungsmesswerten verschoben wird; und
- Klassifizieren (S22) der Entfernungsmesswerte aus aufeinanderfolgend erhaltenen Sätzen von Entfernungsmesswerten.

4. Verfahren nach einem der vorstehenden Ansprüche, wobei das Diagnostizieren der Entfernungsdetektionsfähigkeit des mindestens einen Laserentfernungsmessers umfasst:
- Diagnostizieren, dass die Entfernungsdetektionsfähigkeit des jeweiligen Laserentfernungsmessers fehlerhaft ist, wenn das bestimmte Verteilungsmuster von einer Referenzverteilung von Entfernungsmesswerten, die der ersten Gruppe zugewiesen werden, abweicht.

5. Verfahren nach einem der vorstehenden Ansprüche, weiter umfassend:
- Anpassen (S24) einer Geschwindigkeit der Bergbaumaschine beim Tramming basierend auf dem Diagnostizieren der Entfernungsdetektionsfähigkeit.

6. Tramming-Assistenzanordnung (30), die in einer Bergbaumaschine (10) umfasst ist, die für autonomes Tramming und/oder Fernsteuer-Tramming in einer unterirdischen Bergbauumgebung ausgebildet ist; wobei die Tramming-Assistenzanordnung dazu ausgebildet ist, Entfernungsmesswerte von einem oder mehreren Laserentfernungsmessern zu empfangen, die dazu ausgebildet sind, einen Abstand von dem jeweiligen Sensor zu Pfadbarrieren zu bestimmen, die entlang eines durch die Bergbaumaschine beim Tramming zurückgelegten Pfads vorhanden sind, wobei die Tramming-Assistenzanordnung eine Verarbeitungsschaltung (31) umfasst, die ausgebildet ist zum:
- Erhalten von jeweiligen Sätzen von Entfernungsmesswerten von jeweiligen Laserentfernungsmessern; wobei jeder Entfernungsmesswert einen gemessenen Abstand umfasst, wobei jeder jeweilige Satz von Entfernungsmesswerten innerhalb eines Entfernungsmesswertsegments erhalten (S21a) wird, das einen Ursprung an dem jeweiligen Laserentfernungsmesser aufweist, wobei das Entfernungsmesswertsegment in zwei oder mehr Untersegmente unterteilt ist, von denen jedes einen konfigurierbaren Winkelbereich eines durch den jeweiligen Laserentfernungsmesser abgedeckten Entfernungsdetektionsfelds abdeckt, und wobei die Entfernungsmesswerte des erhaltenen Satzes von Entfernungsmesswerten den zwei oder mehr Untersegmenten innerhalb des Entfernungsmesswertsegments zugeordnet werden;
- Klassifizieren von Entfernungsmesswerten in ihre jeweiligen Untersegmente für jeden erhaltenen Satz von Entfernungsmesswerten gemäß dem gemessenen Abstand durch Zuweisen (S22a) der Entfernungsmesswerte von jeweiligen Sätzen von Entfernungsmesswerten zu einer Vielzahl von Gruppen von Entfernungsmesswerten, wobei ein oder mehrere Entfernungsmesswerte einer ersten Gruppe von Entfernungsmesswerten zugewiesen werden, und Bestimmen (S22b) eines Verteilungsmusters von Entfernungsmesswerten zwischen der Vielzahl von Gruppen von Entfernungsmesswerten, wobei das bestimmte Verteilungsmuster eine Verteilung von Entfernungsmesswerten, die der ersten Gruppe zugewiesen werden, identifiziert, die Abstände umfasst, die kürzer als ein konfigurierbarer Mindestabstand sind, die ungültige Entfernungsmesswerte sind, die Abstände widerspiegeln, die kürzer als ein zulässiger Mindestabstand sind,
wobei Bestimmen eines Verteilungsmusters von Entfernungsmesswerten weiter Bestimmen eines Verteilungsmusters von Entfernungsmesswerten umfasst, die einer zweiten und einer dritten Gruppe innerhalb des Satzes von Entfernungsmesswerten zugewiesen werden,
wobei das bestimmte Verteilungsmuster eine Verteilung von Entfernungsmesswerten, die der zweiten Gruppe zugewiesen werden, identifiziert, die einen gemessenen Abstand umfasst, der länger als ein konfigurierbarer Höchstabstand ist, und
wobei das bestimmte Verteilungsmuster eine Verteilung von Entfernungsmesswerten, die der dritten Gruppe zugewiesen werden, identifiziert, die gemessenen Abstände innerhalb eines Intervalls zwischen dem Mindest- und dem Höchstabstand umfasst; und
- Diagnostizieren einer Entfernungsdetektionsfähigkeit des mindestens einen Laserentfernungsmessers basierend auf dem bestimmten Verteilungsmuster.

7. Bergbaumaschine (10), die für autonomes Tramming und/oder Fernsteuer-Tramming in einer unterirdischen Bergbauumgebung ausgebildet ist, wobei die Bergbaumaschine mindestens einen Laserentfernungsmesser (14, 15) und eine Tramming-Assistenzanordnung (13) nach Anspruch 6 umfasst.

8. Computerprogrammprodukt, das ein nichttransitorisches, computerlesbares Medium umfasst, auf dem sich ein Computerprogramm befindet, das Programmanweisungen umfasst, die in die Verarbeitungsschaltung aus Anspruch 6 ladbar sind und dazu konfiguriert sind, eine Ausführung des Verfahrens nach einem der Ansprüche 1-5 zu bewirken, wenn das Computerprogramm durch die Verarbeitungsschaltung aus Anspruch 6 ausgeführt wird.

## Revendications

1. Procédé mis en œuvre par ordinateur pour diagnostiquer les capacités de détection de distance d'un ou plusieurs dispositifs laser de balayage de mesure de distance compris dans un agencement d'assistance au déplacement d'une machine minière (10) configurée pour un déplacement autonome et/ou un déplacement par commande à distance dans un environnement minier souterrain ; les un ou plusieurs dispositifs laser de balayage de mesure de distance (14, 15) étant configurés pour déterminer des distances entre le dispositif laser de balayage de mesure de distance respectif et des obstacles présents le long d'un trajet parcouru par la machine minière pendant le déplacement ; le procédé comprenant :
- l'obtention (S21) d'ensembles respectifs de lectures de mesure de distance à partir de dispositifs laser de balayage de mesure de distance respectifs ; chaque lecture de mesure de distance comprenant une distance mesurée, dans lequel chaque ensemble respectif de lectures de mesure de distance est obtenu (S21a) au sein d'un segment de lecture de mesure de distance présentant une origine au niveau du dispositif laser de balayage de mesure de distance respectif, dans lequel le segment de lecture de mesure de distance est divisé en deux sous-segments ou plus couvrant chacun une plage angulaire configurable d'un champ de détection de distance couvert par le dispositif laser de balayage de mesure de distance respectif, et dans lequel les lectures de mesure de distance de l'ensemble obtenu de lectures de mesure de distance sont associées aux deux sous-segments ou plus au sein du segment de lecture de mesure de distance ;
- le classement (S22) de lectures de mesure de distance dans leurs sous-segments respectifs pour chaque ensemble obtenu de lectures de mesure de distance en fonction de la distance mesurée en attribuant (S22a) les lectures de mesure de distance d'ensembles respectifs de lectures de mesure de distance à une pluralité de groupes de lectures de mesure de distance, dans lequel une ou plusieurs lectures de mesure de distance sont attribuées à un premier groupe de lectures de mesure de distance, et la détermination (S22b) d'un profil de distribution de lectures de mesure de distance entre la pluralité de groupes de lectures de mesure de distance, dans lequel le profil de distribution déterminé identifie une distribution de lectures de mesure de distance attribuées au premier groupe comprenant des distances inférieures à une distance minimale configurable, qui sont des lectures de mesure de distance invalides reflétant des distances inférieures à une distance minimale admissible ; dans lequel la détermination d'un profil de distribution de lectures de mesure de distance comprend en outre la détermination d'un profil de distribution de lectures de mesure de distance attribuées à un deuxième et à un troisième groupe au sein de l'ensemble de lectures de mesure de distance, dans lequel le profil de distribution déterminé identifie une distribution de lectures de mesure de distance attribuées au deuxième groupe comprenant une distance mesurée supérieure à une distance maximale configurable, et
dans lequel le profil de distribution déterminé identifie une distribution de lectures de mesure de distance attribuées au troisième groupe comprenant des distances mesurées au sein d'un intervalle entre la distance minimale et la distance maximale ;
et
- le diagnostic (S23) des capacités de détection de distance du dispositif laser de balayage de mesure de distance respectif sur la base du profil de distribution déterminé.

2. Procédé selon la revendication 1, dans lequel l'association (S21b) de l'ensemble obtenu de lectures de mesure de distance comprend l'association de l'ensemble obtenu de lectures de mesure de distance pour un dispositif laser de balayage de mesure de distance à une pluralité de sous-segments adjacents au sein du segment de lecture de mesure de distance.

3. Procédé selon l'une quelconque des revendications 1 à 2, le procédé comprenant en outre :
- la réalisation, à plusieurs reprises, de l'étape d'obtention d'ensembles respectifs de lectures de mesure de distance ;
- l'association (S21b) de lectures de mesure de distance provenant d'ensembles de lectures de mesure de distance obtenus consécutivement pour un dispositif laser de balayage de mesure de distance à des sous-segments individuels respectifs, le sous-segment étant configuré symétriquement autour d'une lecture de mesure de distance centrale qui est décalée entre les ensembles de lectures de mesure de distance obtenus consécutivement ; et
- le classement (S22) des lectures de mesure de distance provenant d'ensembles de lectures de mesure de distance obtenus consécutivement.

4. Procédé selon l'une quelconque des revendications précédentes, dans lequel le diagnostic de la capacité de détection de distance de l'au moins un dispositif laser de balayage de mesure de distance comprend :
- le diagnostic que les capacités de détection de distance du dispositif laser de balayage de mesure de distance respectif sont erronées lorsque le profil de distribution déterminé s'écarte d'une distribution de référence de lectures de mesure de distance attribuées au premier groupe.

5. Procédé selon l'une quelconque des revendications précédentes, comprenant en outre :
- l'adaptation (S24) de la vitesse de la machine minière en déplacement sur la base du diagnostic de la capacité de détection de distance.

6. Agencement d'assistance au déplacement (30) compris dans une machine minière (10) configurée pour un déplacement autonome et/ou un déplacement par commande à distance dans un environnement minier souterrain ; l'agencement d'assistance au déplacement étant configuré pour recevoir des lectures de mesure de distance d'un ou plusieurs dispositifs laser de balayage de mesure de distance configurés pour déterminer une distance entre le capteur respectif et des obstacles présents le long d'un trajet parcouru par la machine minière en déplacement, l'agencement d'assistance au déplacement comprenant une circuiterie de traitement (31) configurée pour :
- obtenir des ensembles respectifs de lectures de mesure de distance à partir de dispositifs laser de balayage de mesure de distance respectifs ; chaque lecture de mesure de distance comprenant une distance mesurée, dans lequel chaque ensemble respectif de lectures de mesure de distance est obtenu (S21a) au sein d'un segment de lecture de mesure de distance présentant une origine au niveau du dispositif laser de balayage de mesure de distance respectif, dans lequel le segment de lecture de mesure de distance est divisé en deux sous-segments ou plus couvrant chacun une plage angulaire configurable d'un champ de détection de distance couvert par le dispositif laser de balayage de mesure de distance respectif, et dans lequel les lectures de mesure de distance de l'ensemble obtenu de lectures de mesure de distance sont associées aux deux sous-segments ou plus au sein du segment de lecture de mesure de distance ;
- classifier des lectures de mesure de distance dans leurs sous-segments respectifs pour chaque ensemble obtenu de lectures de mesure de distance en fonction de la distance mesurée en attribuant (S22a) les lectures de mesure de distance d'ensembles respectifs de lectures de mesure de distance à une pluralité de groupes de lectures de mesure de distance, dans lequel une ou plusieurs lectures de mesure de distance sont attribuées à un premier groupe de lectures de mesure de distance, et déterminer (S22b) un profil de distribution de lectures de mesure de distance entre la pluralité de groupes de lectures de mesure de distance, dans lequel le profil de distribution déterminé identifie une distribution de lectures de mesure de distance attribuées au premier groupe comprenant des distances inférieures à une distance minimale configurable, qui sont des lectures de mesure de distance invalides reflétant des distances inférieures à une distance minimale admissible,
dans lequel la détermination d'un profil de distribution de lectures de mesure de distance comprend en outre la détermination d'un profil de distribution de lectures de mesure de distance attribuées à un deuxième et à un troisième groupe au sein de l'ensemble de lectures de mesure de distance,
dans lequel le profil de distribution déterminé identifie une distribution de lectures de mesure de distance attribuées au deuxième groupe comprenant une distance mesurée supérieure à une distance maximale configurable, et
dans lequel le profil de distribution déterminé identifie une distribution de lectures de mesure de distance attribuées au troisième groupe comprenant des distances mesurées au sein d'un intervalle entre la distance minimale et la distance maximale ;
et
- diagnostiquer une capacité de détection de distance de l'au moins un dispositif laser de balayage de mesure de distance sur la base du profil de distribution déterminé.

7. Machine minière (10) configurée pour un déplacement autonome et/ou un déplacement par commande à distance dans un environnement minier souterrain, la machine minière comprenant au moins un dispositif laser de balayage de mesure de distance (14, 15) et un agencement d'assistance au déplacement (13) selon la revendication 6.

8. Produit programme d'ordinateur comprenant un support non transitoire lisible par ordinateur sur lequel se trouve un programme informatique comprenant des instructions de programme pouvant être chargées dans la circuiterie de traitement selon la revendication 6 et configurées pour provoquer l'exécution du procédé selon l'une quelconque des revendications 1 à 5 lorsque le programme informatique est exécuté par la circuiterie de traitement selon la revendication 6.
